# EUROPEAN PATENT APPLICATION

(11) **EP 1 830 319 A2**
(43) Date of publication of application: **05.09.2007**
(21) Application number: 06114729.4
(22) Date of filing: 30.05.2006
(51) Int. Cl.: G06Q 30/00, G07F 7/02

(54) **Information output system, information output method, and computer product**

(30) Priority: 31.01.2006 JP 2006023713
(71) Applicant: FUJITSU LIMITED, Kawasaki-shi, Kanagawa 211-8588 (JP); Fujitsu Frontech Limited, Inagi-shi, Tokyo 206-8555 (JP)
(72) Inventor: Toyokawa, Takashi, Inagi-shi Tokyo 206-8555 (JP)
(74) Representative: Kreutzer, Ulrich

(57) **Abstract**

An output-history storing unit stores product information output to a terminal device as output history for each terminal device. A purchasing-history storing unit stores purchase information for identifying a product purchased by a user as purchasing history for each user. A verifying unit collates the output history stored in the output-history storing unit with the purchasing history stored in the purchasing-history storing unit, and verifies an effect of the product information.

## Description

### BACKGROUND OF THE PRESENT INVENTION

### 1. Field of the present invention

The present invention relates to a technology for outputting product information on a product in a store based on a location of a terminal device moving with a user in the store.

### 2. Description of the Related Art

Conventionally, there is a technology in which a display or the like is provided on a shopping cart or shopping basket and displays product information, etc., according to the location thereof. For example, in Japanese Patent Application Laid-open No. 2004-110805, a technology in which positional information of a shopping cart is acquired and information related to products according to the positional information (for example, information on products displayed on store shelves in that location) are displayed to the shopping cart user, via a display provided on the shopping cart, is disclosed.

However, the conventional technology described above merely displays information related to products to the user side. This is problematic in that marketing by the store side is not considered. In other words, for example, product information is merely outputted and displayed on the display provided on the shopping cart, etc. Thus, this is problematic in that effect of profitability of the product information and the like, such as whether the product information contributes to the purchasing behavior of the user, cannot be verified.

### SUMMARY OF THE PRESENT INVENTION

It is an object of the present invention to at least solve the problems in the conventional technology.

An information output system according to one aspect of the present invention outputs product information related to a product in a store to a terminal device moving with a user based on a location of the terminal device. The information output system includes an output-history storing unit that stores the product information output to the terminal device as output history for each terminal device; a purchasing-history storing unit that stores purchase information for identifying a product purchased by the user as purchasing history for each user; and a verifying unit that collates the output history stored in the output-history storing unit with the purchasing history stored in the purchasing-history storing unit, and verifies an effect of the product information based on a result of the collation.

A method according to another aspect of the present invention is for outputting product information related to a product in a store to a terminal device moving with a user based on a location of the terminal device. The method includes output-history storing including storing the product information output to the terminal device as output history for each terminal device; purchasing-history storing including storing purchase information for identifying a product purchased by the user as purchasing history for each user; and effect verifying including collating the output history stored at the output-history storing with the purchasing-history stored at the purchasing history storing, and verifying an effect of the product information based on a result of the collation.

A computer-readable recording medium according to still another aspect of the present invention stores a computer program for outputting product information related to a product in a store to a terminal device moving with a user based on a location of the terminal device. The computer program causes a computer to execute output-history storing including storing the product information output to the terminal device as output history for each terminal device; purchasing-history storing including storing purchase information for identifying a product purchased by the user as purchasing history for each user; and effect verifying including collating the output history stored at the output-history storing with the purchasing-history stored at the purchasing history storing, and verifying an effect of the product information based on a result of the collation.

The above and other objects, features, advantages and technical and industrial significance of this invention will be better understood by reading the following detailed description of presently preferred embodiments of the present invention, when considered in connection with the accompanying drawings.

### BRIEF DESCRIPTION OF THE DRAWINGS

Fig. 1 is a schematic for illustrating an outline of an information output system according to a first embodiment of the present invention;
Fig. 2 is a block diagram of the information output system according to the first embodiment;

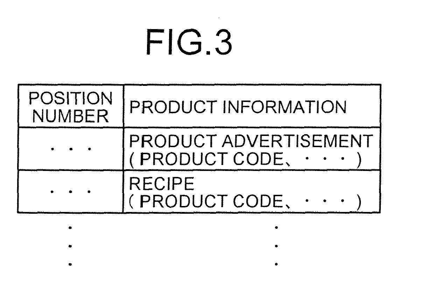

Fig. 3 is a table of an example of information stored in a product-information storing unit;
Fig. 4 is an example of a header-number table corresponding to respective log information to be generated;
Fig. 5 is a schematic of an example of the log information to be generated;
Fig. 6 is a table of an example of log information stored in a store server device;
Fig. 7 is a flowchart of a processing procedure for a cart terminal device in the information output system according to the first embodiment; and
Fig. 8 is a block diagram of a computer executing an information output program.

### DETAILED DESCRIPTION OF THE PREFERRED EMBODIMENTS

Exemplary embodiments of the present invention will be explained in detail below with reference to the accompanying drawings.

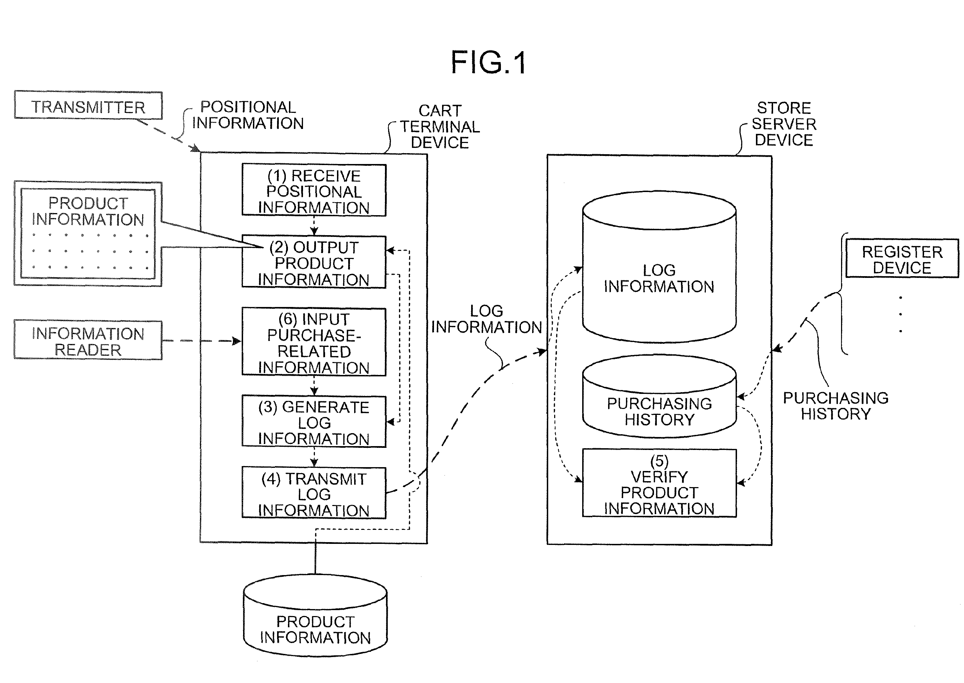

Fig. 1 is a schematic for illustrating an outline of an information output system according to a first embodiment of the present invention. The information output system according to the first embodiment outputs product information related to products in a store (for example, information on sales items and recipes for food ingredients) to a cart terminal device, according to the location of the cart terminal device moving within the store with the user, and is mainly characterized in that the profitability of the product information is verified.

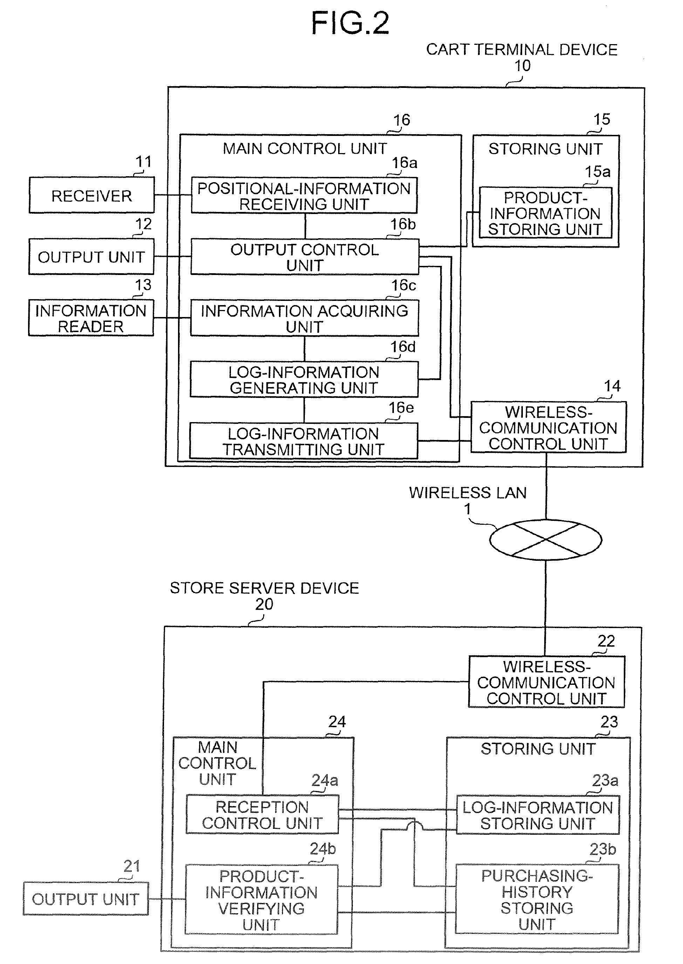

As a detailed explanation of the main characteristic, the cart terminal device and the store server device constituting the information output system according to the first embodiment are connected to allow a communication therebetween, via a wireless local-area-network (LAN). The cart terminal device holds the product information related to the products disposed within the store, according to the location within the store. When positional information transmitted from transmitters provided in various places within the store is received (see (1) in Fig. 1), the cart terminal device retrieves product information according to the positional information. When relevant product information is retrieved, the cart terminal device automatically outputs the information to, for example, a display, monitor, or a speaker, by image or voice (see (2) in Fig. 2). The product information held by the cart terminal device is downloaded from, for example, a terminal device within the store, not shown in Fig.1, via the wireless LAN when the cart terminal device is turned on or at a regular interval, and the newest state is always maintained.

When the product information is output, the cart terminal device generates log information on the output history of the product information. Specifically, the cart terminal device generates log information in which a predetermined header number or the like is coordinated with product information (for example, sales item advertisements and recipes related to food ingredients) and the output date and time of the product information (see (3) in Fig. 2). Then, after the log information is generated, the cart terminal device transmits the generated log information to the store server device (see (4) in Fig.1).

At the same time, the store server device that received the log information stores the log information as the output history of the product information. Then, the store server device collates the output history with purchasing history corresponding to the output history and verifies the effect of the product information (see (5) in Fig. 1). Specifically, the store server device collates the output history of the product information stored as the log information and the purchasing information corresponding thereto. As a result, if, for example, after the product information has been output and displayed to the user, a product related to the product information is purchased, the store server device can analogize that the product information contributed to the purchasing behavior of the user, and verify the profitability thereof as the effect of the product information.

When purchase-related information read by an information reader is acquired (see (6) in Fig. 1), the cart terminal device further generates log information on the purchase-related information. Specifically, the cart terminal device generates the log information in which predetermined header number is coordinated with the purchase-related information (for example, information indicating the loading of a product into the cart or the cancellation of a product from within the cart) and the acquisition date and time. Then, after the log information is generated, the cart terminal device transmits the generated log information to the store server device in the same way as explained earlier.

The store server device, that has received the log information on the purchase-related information from the cart terminal device, stores the log information as purchase-related information. Then, the store server device further collates the purchasing history and the purchase-related information corresponding to the purchasing history and verifies the effect of the product information. Specifically, the store server device collates the purchase-related information and the output history corresponding to thereto. As a result, if, for example, after the product information has been output and displayed to the user, a product unrelated to the product information is cancelled and a product related to the product information is loaded, the store server device can analogize that the product information contributed to the purchasing behavior of the user and verify the profitability thereof as the effect of the product information.

As described above, the information output system according to the first embodiment can, for example, analogize whether the product information outputted and displayed on the display or the like provided on the shopping cart contributes to the purchasing behavior of the user and can verify the profitability of the product information.

Fig. 2 is a block diagram of the information output system according to the first embodiment. As shown in the diagram, a cart terminal device 10 and a store server device 20 constituting the information output system according to the first embodiment are connect to allow a communication therebetween, via a wireless LAN 1.

The cart terminal device 10 includes a receiver 11, an output unit 22, an information reader 13, a wireless-communication control unit 14, a storing unit 15, and a main control unit 16.

The receiver 11 receives information from the transmitter provided within the store. The output unit 12 outputs product information (content information) to the user of the cart terminal device 10, includes a monitor (or a display or a touch-panel) or a speaker, and outputs recipes for food ingredients related to sales items and sales information of the products. In addition, the output unit 12 receives input from the user and outputs and displays information corresponding to the input.

The information reader 13 reads identifying information (for example, product code composed of a bar code or an IC tag) attached to products displayed in the store, and for example, is manual or automatic. A scanner that reads bar codes, an IC tag reader that reads IC tags, etc. are equivalent thereto. The wireless-communication control unit 14 controls a wireless communication with the store server device 20.

The storing unit 15 stores data and programs required for various processes by the main control unit 16, and includes a product-information storing unit 15a as that which is particularly closely related to the present invention. The product-information storing unit 15a stores product information (content information) related to the products displayed in the store, and for example, stores product advertisements (sales information) and recipes for food items in correspondence with position numbers uniquely assigned to respective locations within the store. The latest product information downloaded from the store terminal device or the like via the wireless LAN when the cart terminal device 10 is turned on or at regular intervals is stored by an output control unit 16b, described hereafter.

The main control unit 16 includes an internal memory that stores control programs, such as an operating system (OS), and programs and required data regulating various process procedures and the like. The main control unit 16 executes various processes, and includes a positional-information receiving unit 16a, the output control unit 16b, an information acquiring unit 16c, a log-information generating unit 16d, and a log-information transmitting unit 16e as those which are particularly closely related to the present invention.

The positional-information receiving unit 16a detects the location within the store from the positional information received via the receiver 11. Specifically, the positional-information receiving unit 16a confirms, for example, whether the positional information is received at a regular interval (for example, every several seconds) and detects the position number uniquely assigned to respective locations within the store from the received positional information. Then, the positional-information receiving unit 16a outputs the detected position number to the output control unit 26b.

The output control unit 16b outputs the product information (content information) to the output unit 12. The output control unit 16b retrieves product information from among the product information stored in the product-information storing unit 15a, based on the position number received from the positional-information receiving unit 16a. Then, when the relevant product information is detected, the output control unit 16b confirms whether the product information is that which has not yet been output. If the product information has not yet been output, the output control unit 16b automatically outputs the product information to the output unit 12. In addition, simultaneously with the output of the product information to the output unit 12, the output control unit 16b outputs the product information and the output date and time to the log-information generating unit 16d. The latest product information downloaded from the store terminal device or the like via the wireless LAN when the cart terminal device 10 is turned on or at regular intervals is stored in the product-information storing unit 15a.

The information acquiring unit 16c acquires the identification number of the product read by the information reader 13. The information acquiring unit 16c acquires the identification number read by the information reader 13, operated by the user of the cart terminal device 10, and purchase-related information (for example, information indicating the loading of a product into the cart or the cancellation of a product from within the cart). In addition, the information acquiring unit 16c outputs the purchase-related information and the acquisition date and time thereof to the log-information generating unit 16d.

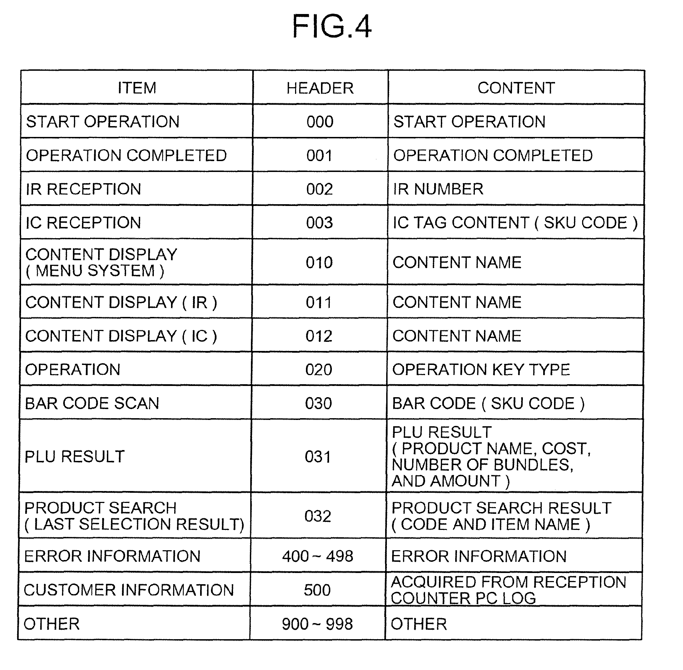

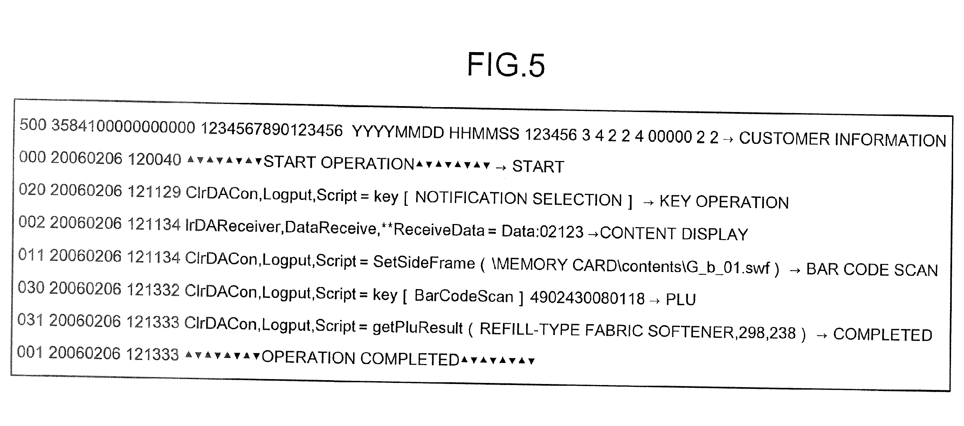

The log-information generating unit 16d generates the log information to be transmitted to the store server device 20. The log-information generating unit 16d includes, for example, a header-number table corresponding to generated log information, as shown in Fig. 4. The log-information generating unit 16d generates the log information of the output history of the product information in which the predetermined header numbers have been added to the product information and the output date and time thereof (see Fig. 5).

In addition, when the purchase-related information has been acquired by the information acquiring unit 16c, the log-information generating unit 16d further generates log information in which header numbers and the like are added to the purchase-related information received from the information acquiring unit 16c and the acquisition date and time thereof (see Fig. 5). Although this is not shown in detail in Fig. 2, log information based on the position number detected by the positional-information receiving unit 16a can be generated (namely, for the purpose of understanding the circulation of the user within the store), log information for user operation information received via a touch-panel or the like disposed on the output unit 12 and the information output in accompaniment to the user operations can be generated, and log information of user attributes (for example, age, gender, and family structure) can be generated. After the log information is generated, the log-information generating unit 16d outputs the generated log information to the log-information transmitting unit 16e.

The log-information transmitting unit 16e transmits the log information to the store server device 20. Specifically, the log information received from the log-information generating unit 16d is transmitted to the store server device 20 in real time, via the wireless LAN 1.

The cart terminal device 10 can also be implemented by incorporating each function described above in an information processing device, such as a known personal computer, mobile communication terminal, or a personal digital assistant (PDA).

The store server device 20 includes an output unit 21, a wireless-communication control unit 22, a storing unit 23, and a main control unit 24. The output unit 21 outputs a verification result by a product-information verifying unit 24b, described hereafter, and includes a monitor (or a display or a touch-panel) and a speaker. The wireless-communication control unit 22 is a means for controlling wireless communication with the cart terminal device 10.

The storing unit 23 of the store server device 20 stores data and programs required for various processes by the main control unit 24, and includes a log-information storing unit 23a and a purchasing-history storing unit 23b as those which are particularly closely related to the present invention.

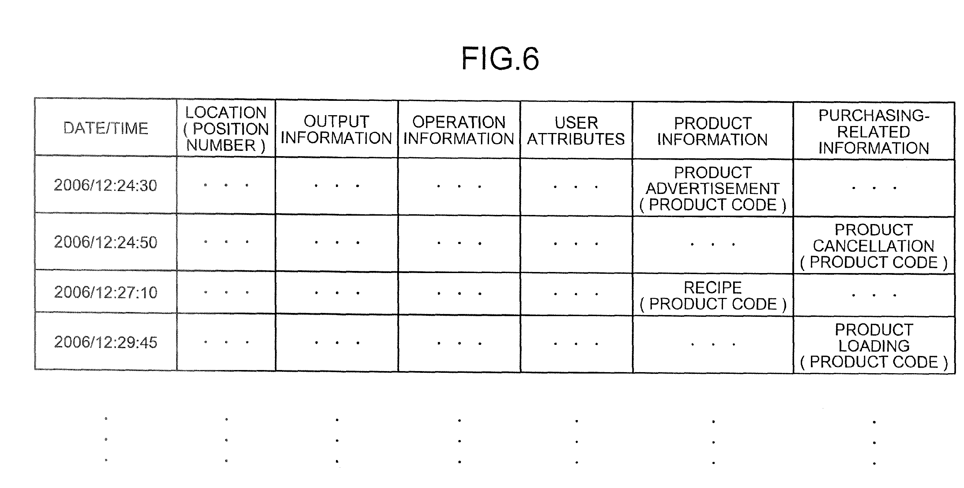

The log-information storing unit 23a stores the log information received from the cart terminal device 10 for each cart terminal. For example, as shown in Fig. 6, location (position number), output information, operation information, user attributes, product information, and purchase-related information are stored, coordinated with date and time.

The "Date and time" corresponds to each item, and for example, indicates the date and time at which the product information was output. The average shopping time of the user and the like can be understood from the date and time. "Location (position number)" indicates a location within the store by the position number. If the same position number is stored consecutively, it is understood that the user had stopped in the same location within the store. "Output information" indicates information outputted with user operations, and "operation information" indicates information related to user operations. The user attributes are information indicating the user's age, gender, family structure, etc., and for example, is input by the user at the start of the cart terminal use. "Product information" is information indicating the output history of product information automatically outputted from the output control unit 16b of the cart terminal device 10 to the output unit 12 (for example, advertisements and recipes), based on the position number received from the positional-information receiving unit 16a. Purchase-related information is information indicating, for example, the loading of a product into the cart or the cancellation of a product from within the cart.

The purchasing-history storing unit 23b stores the purchase information of the products received from a register device within the store as purchasing history. For example, the product code of a product paid for at the register device and the payment date and time, etc. are coordinated and stored for each of the cart terminal devices 10.

The main control unit 24 of the store server device 20 includes an internal memory that stores control programs, such as an OS, and programs and required data regulating various process procedures and the like. The main control unit 24 executes various processes, and includes a reception control unit 24a and the product-information verifying unit 24b as those which are particularly closely related to the present invention.

The reception control unit 24a controls the log information and the purchase information received from the cart terminal device 10, via the wireless LAN 1. The reception control unit 24a stores the log information (log information of the output history of the product information and purchase-related information) received from the cart terminal device 10 in the log-information storing unit 23a. In addition, the purchase information of the products received from the register devices within the store is stored to a purchasing-history storing unit 32b as purchasing history.

The product-information verifying unit 24b collates the output history of the product information with the purchasing history corresponding to the output history and verifies the effect of the product information. The product-information verifying unit 24b reads the output history from the log-information storing unit 23a, reads the purchasing history from the purchasing-history storing unit 23b, and collates the output history and the purchasing history. As a result, if, for example, after the product information has been output and displayed to the user, a product related to the product information is purchased, the product-information verifying unit 24b can analogize that the product information contributed to the purchasing behavior of the user and verify the profitability thereof as the effect of the product information.

In addition, the product-information verifying unit 24b reads the purchase-related information corresponding to the output history of the product information from a purchase-related-information storing unit 23c and further collates the output history with the purchase-related information. As a result, if, after the product information has been output and displayed to the user, a product unrelated to the product information is cancelled and a product related to the product information is loaded, the product-information verifying unit 24b can analogize that the product information contributed to the purchasing behavior of the user and verify the profitability thereof as the effect of the product information.

The store server device 20 can also be implemented by incorporating each function described above in an information processing device, such as a known personal computer or a workstation.

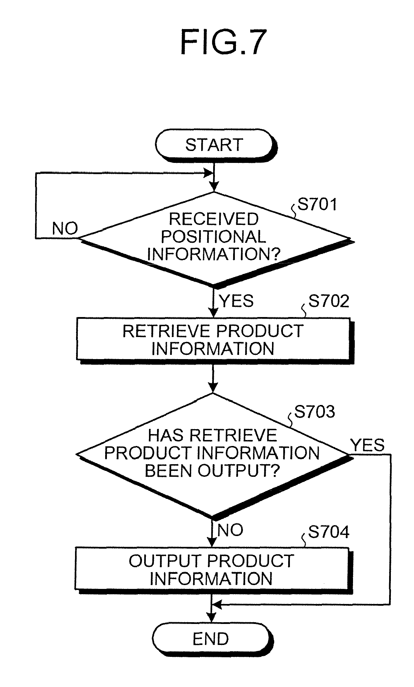

Fig. 7 is a flowchart of a processing procedure for a cart terminal device in the information output system according to the first embodiment.

When the positional information is received via the receiver 11 (Step S701), the positional-information receiving unit 16a of the cart terminal device 10 detects a position number uniquely assigned to respective locations within the store from the received positional information. Then, the positional-information receiving unit 16a outputs the detected position number to the output control unit 16b.

The output control unit 16b receiving the position number retrieves product information from among the product information stored in the product-information storing unit 15a, based on the position number received from the positional-information receiving unit 16a (Step S702). Then, the output control unit 16b confirms whether the retrieved product information is that which has not yet been output (Step S703). As a result, if the retrieved product information has not yet been output (No, at Step S703), the product information is automatically output to the output unit 12 (Step 5704).

On the other hand, if the retrieved product has already been output (Yes, at Step S703), the output control unit 16b completes the process. Although this is not shown in Fig. 7, in Step 702, the output control unit 16b similarly completes the process when the product information based on the position number received from the positional-information receiving unit 16a cannot be retrieved from among the product information stored in the product-information storing unit 15a, as well.

As explained above, according to the first embodiment, the information output system collates the output history (content of product information output to the terminal device) and the purchasing history (purchase information identifying the product purchased by the user) and verifies the effect of the product information. Thus, the information output system can, for example, analogize whether the product information outputted and displayed on the display or the like provided on the shopping cart, etc. contributes to the purchasing behavior of the user and verify the profitability of the product information.

Furthermore, according to the first embodiment, the information output system further stores the output date and time of the product information as the output history and the purchase date and time of the product purchased by the user as the purchasing history, further collates the output date and time and the purchase date and time, and verifies the effect of the product information. Thus, the information output system can analogized whether the product information outputted and displayed on the display contributes to the purchasing behavior of the user in detail (for example, if, after product information is output and displayed to the user, a product related to the product information is purchased, it is analogized that the product information contributed to the purchasing behavior of the user) and verify the profitability of the product information in detail.

Moreover, according to the first embodiment, the information output system further stores the product loading information (for example, the information indicated by the product code composed of a bar code or an IC tag) indicating the loading of a product into the product carrier (for example, a shopping cart or a shopping basket) equipped with the terminal device and product canceling information (for example, the information indicated by the product code composed of a bar code or an IC tag) indicating the cancellation of a product loaded into the product carrier, further collates the output history with any one of the product loading information and the product canceling information or both, and verifies the effect of the product information. Thus, the information output system can analogized whether the product information outputted and displayed on the display contributes to the purchasing behavior of the user from various perspectives (for example, if, after product information is output and displayed to the user, a product unrelated to the product information is cancelled and a product related to the product information is loaded, it is analogized that the product information contributed to the purchasing behavior of the user) and verify the profitability of the product information displayed to the user in further detail.

Furthermore, according to the first embodiment, the terminal device provided on the product carrier acquires output history and purchasing history. Thus, the information output system can easily acquire the output history with the actions of the user using the product carrier.

Moreover, according to the first embodiment, the sever device connected to the terminal devices verify the effect of the product information. Thus, the information output system can verify the profitability of the product information statistically and to a high-degree.

Although the first embodiment has been explained heretofore, various differing embodiments of the present invention can be implemented aside from the first embodiment. Hereafter, other embodiment included in the present invention will be explained as a second embodiment.

Although, an instance in which the log-information transmitting unit 16e transmits the log information received from the log-information generating unit 16d to the store server device 20 in real time was explained according to the first embodiment, the present invention is not limited thereto. If communication with the store server device 20 is not passible, the received log information can be temporarily stored in an internal memory or the like and transmitted. In addition, even when communication with the store server device 20 is possible, the received log information can be temporarily stored and transmitted to the store server device 20 regularly. As a result, the generated log information can be transmitted without fail.

Each constituent element of the cart terminal device 10 and the store server device 20 shown in Fig. 2 is a functional concept and is not necessarily required to be physically configured as shown in the diagram. In other words, specific embodiments of the disintegration and integration of the cart terminal device 10 and the store server device 20 are not limited to that shown in the diagram. All or a part of the constituent elements can be configured through functional or physical disintegration and integration in desired units, according to various loads and usage conditions. For example, the log-information generating unit 16d and the log-information transmitting unit 16e can be integrated, or the log-information storing unit 23a, the purchasing-history storing unit 23b, and the purchase-related-information storing unit 23c of the store server device 20 can be integrated. Furthermore, all or a desired part of respective processing functions executed by the cart terminal device 10 and the store server device 20 can be actualized by a central processing unit (CPU) or a program analytically executed by the CPU or can be actualized as hardware by wired logic.

In addition, all or a part of the processes explained as those performed automatically, among the process explained in the present embodiment, can also be performed manually. On the other hand, all or a part of the processes explained as those performed manually can also be performed automatically by a known method. In addition, information including process procedures, control procedures, specific names, and various data and parameters indicated in the content above and in the drawings can be changed at will, unless otherwise specified.

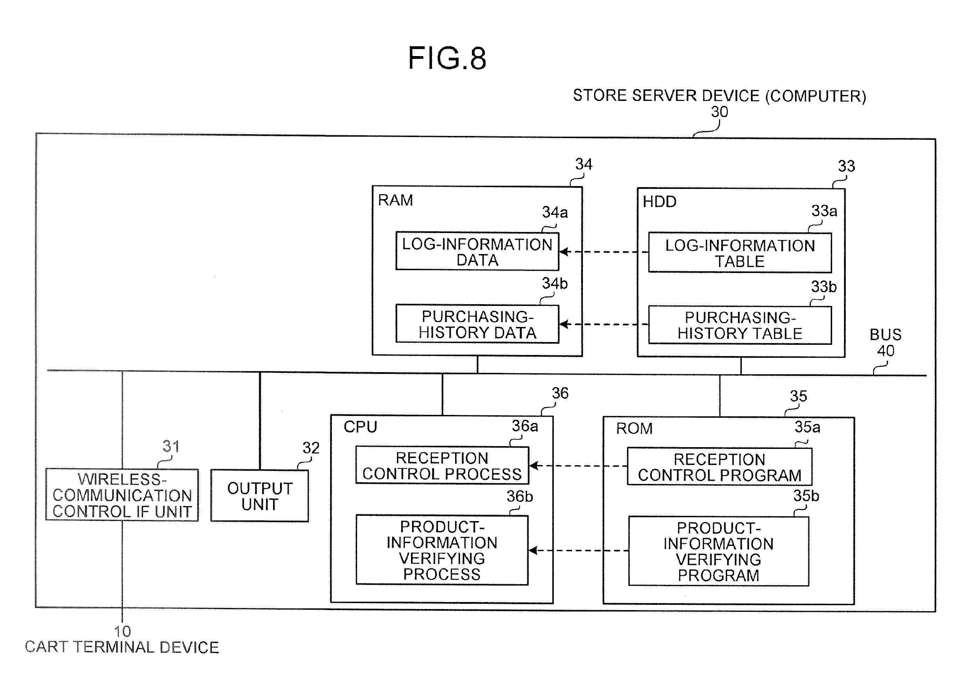

The various processes explained in the embodiment above can be implemented through an execution of programs prepared in advance, by a computer system, such as a personal computer or a workstation. Hereafter, an example of a computer executing an information output program having the same function as the process (information verifying process) of the store server device 20, explained in the first embodiment, is explained using Fig. 8. Fig. 8 is a block diagram of a computer 30 executing the information output program.

The computer 30 that is the store server device, including a wireless-communication control IF unit 31, an output unit 32, a hard disk drive (HDD) 33, a random access memory (RAM) 34, a read only memory (ROM) 35, and a CPU 36, connected by a predetermined bus 40. The wireless-communication control IF unit 31 corresponds to the wireless-communication control unit 22 shown in Fig. 2. The output unit 32 similarly corresponds to the output unit 21.

An information verifying program exerting the same functions as the store server device 20 shown in Fig. 1 above, namely a reception control program 35a and a product-information verifying program 35b are stored in the ROM 35 beforehand, as shown in Fig. 7. The programs 35a and 35b can be integrated or disintegrated accordingly, as can each constituent element of the store server device 20 shown in Fig. 2.

When the CPU 36 reads the programs 35a and 35b from the ROM 35 and executes the programs, the programs 35a and 35b respectively function as a reception control process 36a and a product-information verifying process 36b, as shown in Fig. 7. The processes 36a and 36b respectively correspond to the reception control unit 24a and the product-information verifying unit 24b of the store server device 20 shown in Fig. 2.

A log-information table 33a and a purchasing-history table 33b are provided in the HDD 33, as shown in Fig. 7. The log-information table 33a and the purchasing-history table 33b respectively correspond to the log-information storing unit 23a and the purchasing-history storing unit 23b in the store server device 20. The CPU 36 reads log-information data 34a and purchasing-history data 34b from the log-information table 33a and the purchasing-history table 33b, respectively, stores the data in the RAM 34, and executes the information verifying process based on the log-information data 34a and the purchasing-history data 34b stored in the RAM 34.

The respective programs 35a and 35b are not necessarily required to be stored in the ROM 35 from the beginning. For example, each program can be stored in a "portable physical media", such a flexible disk (FD), a compact disc-read only memory (CD-ROM), a magneto-optical (MO) disk, a digital versatile disc (DVD), an integrated-circuit (IC) card, that is inserted into the computer 30, a "fixed physical media", such as an HDD provided within or outside of the computer 30, or an "other computer (or server)" connected to the computer 30 via a public circuit, the internet, a LAN, wide-area network (WAN), etc. The computer 30 can read each program therefrom and execute the program.

According to an embodiment of the present invention, the information output system collates the output history (for example, the content of product information outputted to the terminal device) and the purchasing history (for example, a product code identifying the product purchased by the user) and verifies the effect of the product information. Thus, the information output system can, for example, analogize whether the product information outputted and displayed on the display or the like provided on a shopping cart, etc., contributes to the purchasing behavior of the user and verify the profitability of the product information.

Furthermore, according to an embodiment of the present invention, the information output system further stores the output date and time of the product information as output history and the purchasing date and time of the product purchased by the user as purchasing history, further collates the output date and time and the purchasing date and time, and verifies the effect of the product information. Thus, the information output system can analogized whether the product information contributes to the purchasing behavior of the user in detail (for example, after product information is output and displayed to the user, if a product related to the product information is purchased, it is analogized that the product information contributed to the purchasing behavior of the user) and verify the profitability of the product information in detail.

Moreover, according to an embodiment of the present invention, the information output system further stores product loading information (for example, information indicated by a product code composed of a bar code or an integrated circuit (IC) tag) indicating the loading of a product into a product carrier (for example, a shopping cart or a shopping basket) having the terminal device and product canceling information (for example, information indicated by a product code composed of a bar code or an IC tag) indicating the cancellation of a product loaded into the product carrier, further collates the output history with any one of the product loading information and the product canceling information or both, and verifies the effect of the product information. Thus, the information output system can analogized whether the product information outputted and displayed on the display contributes to the purchasing behavior of the user from various perspectives (for example, after product information is output and displayed to the user, if a product unrelated to the product information is cancelled and a product related to the product information is loaded, it is analogized that the product information contributed to the purchasing behavior of the user) and verify the profitability of the product information displayed to the user in further detail.

Furthermore, according to an embodiment of the present invention, the terminal device provided on the product carrier acquires purchase-related information. Thus, the information output system can easily acquire the purchase-related information with the actions of the user using the product carrier.

Moreover, according to an embodiment of the present invention, the sever device connected to the terminal devices verifies the effect of the product information. Thus, the information output system can verify the profitability of the product information statistically and to a high-degree.

Although the present invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. An information output system that outputs product information related to a product in a store to a terminal device moving with a user based on a location of the terminal device, the information output system comprising:
an output-history storing unit that stores the product information output to the terminal device as output history for each terminal device;
a purchasing-history storing unit that stores purchase information for identifying a product purchased by the user as purchasing history for each user; and
a verifying unit that collates the output history stored in the output-history storing unit with the purchasing history stored in the purchasing-history storing unit, and verifies an effect of the product information based on a result of the collation.

2. The information output system according to claim 1, wherein
the output-history storing unit further stores first date and time of outputting the product information,
the purchasing-history storing unit further stores second data and time of the user purchasing the product, and
the verifying unit further collates the first date and time with the second date and time, and verifies the effect of the product information based on a result of the further collation.

3. The information output system according to claim 1, further comprising:
a purchase-related-information storing unit that stores at least one of product loading information indicating putting of a product into a product carrier in which the terminal device is installed and product canceling information indicating canceling of a product put in the product carrier, wherein
the verifying unit further collates the output history with the at least one of the product loading information and the product canceling information, and verifies the effect of the product information based on the further collation.

4. The information output system according to claim 3, further comprising:
a purchase-related-information acquiring unit that acquires the at least one of the product loading information and the product canceling information, wherein
the purchase-related-information storing unit stores the at least one of the product loading information and the product canceling information acquired by the purchase-related-information acquiring unit.

5. The information output system according to claim 1, further comprising:
a server device to which a plurality of the terminal devices is connected, wherein
the verifying unit is installed in the server device.

6. A method of outputting product information related to a product in a store to a terminal device moving with a user based on a location of the terminal device, the method comprising:
output-history storing including
storing the product information output to the terminal device as output history for each terminal device;
purchasing-history storing including
storing purchase information for identifying a product purchased by the user as purchasing history for each user; and
effect verifying including
collating the output history stored at the output-history storing with the purchasing-history stored at the purchasing history storing; and
verifying an effect of the product information based on a result of the collation.

7. The method according to claim 6, wherein
the output-history storing includes further storing first date and time of outputting the product information,
the purchasing-history storing includes further storing second data and time of the user purchasing the product, and
the effect verifying includes
further collating the first date and time with the second date and time; and
further verifying the effect of the product information based on the further collation.

8. The method according to claim 6, further comprising:
purchase-related-information storing including
storing at least one of product loading information indicating putting of a product into a product carrier in which the terminal device is installed and product canceling information indicating canceling of a product put in the product carrier, wherein
the verifying includes
further collating the output history with the at least one of the product loading information and the product canceling information; and
further verifying the effect of the product information based on the further collation.

9. The method according to claim 8, further comprising:
acquiring the at least one of the product loading information and the product canceling information, wherein
the purchase-related-information storing includes
storing the at least one of the product loading information and the product canceling information acquired at the acquiring.

10. A computer-readable recording medium that stores a computer program for outputting product information related to a product in a store to a terminal device moving with a user based on a location of the terminal device, wherein the computer program causes a computer to execute:
output-history storing including
storing the product information output to the terminal device as output history for each terminal device;
purchasing-history storing including
storing purchase information for identifying a product purchased by the user as purchasing history for each user; and
effect verifying including
collating the output history stored at the output-history storing with the purchasing-history stored at the purchasing history storing; and
verifying an effect of the product information based on a result of the collation.

11. The computer-readable recording medium according to claim 10, wherein
the output-history storing includes further storing first date and time of outputting the product information,
the purchasing-history storing includes further storing second data and time of the user purchasing the product, and
the effect verifying includes
further collating the first date and time with the second date and time; and
further verifying the effect of the product information based on the further collation.

12. The computer-readable recording medium according to claim 10, wherein
the computer program further causes the computer to execute purchase-related-information storing including storing at least one of product loading information indicating putting of a product into a product carrier in which the terminal device is installed and product canceling information indicating canceling of a product put in the product carrier, and
the verifying includes
further collating the output history with the at least one of the product loading information and the product canceling information; and
further verifying the effect of the product information based on the further collation.

13. The computer-readable recording medium according to claim 12, wherein
the computer program further causes the computer to execute acquiring the at least one of the product loading information and the product canceling information, and
the purchase-related-information storing includes storing the at least one of the product loading information and the product canceling information acquired at the acquiring.
